**Europäisches Patentamt**

**European Patent Office**

**Office européen des brevets**

(11) Veröffentlichungsnummer: **0 128 570**
**B1**

(12) **EUROPÄISCHE PATENTSCHRIFT**

(45) Veröffentlichungstag der Patentschrift:
**31.08.88**

(21) Anmeldenummer: **84106616.0**

(22) Anmeldetag: **08.06.84**

(51) Int. Cl.⁴: **B 21 D 53/30**

(54) **Verfahren und Vorrichtung zur Herstellung von aus Metallprofilen bestehenden Rundkörpern, insbesondere von Radfelgen für Kraftfahrzeuge.**

(30) Priorität: **09.06.83 DE 3320927**

(43) Veröffentlichungstag der Anmeldung:
**19.12.84 Patentblatt 84/51**

(45) Bekanntmachung des Hinweises auf die Patenterteilung:
**31.08.88 Patentblatt 88/35**

(84) Benannte Vertragsstaaten:
**AT BE CH DE FR GB IT LI LU NL SE**

(56) Entgegenhaltungen:
**DE-A-2 650 357**
**DE-A-3 028 956**
**DE-B-1 157 885**
**DE-C-1 256 610**
**US-A-3 832 879**

(73) Patentinhaber: **Späth GmbH & Co. KG Stahlbau-Biegetechnik, Hardstrasse 8, D-7705 Steisslingen (DE)**

(72) Erfinder: **Späth, Walter, Dipl.- Ing., Bordwaldstrasse 74, D-7760 Radolfzell 15-Güttingen (DE)**

(74) Vertreter: **Riebling, Peter, Dr.- Ing., Patentanwälte Dr.- Ing., Dipl.- Ing., Ing.(grad.) Günter Riebling Dr.- Ing., Dipl.- Ing. Peter Riebling Rennerle 10 Postfach 3160, D-8990 Lindau (DE)**

EP 0 128 570 B1

**Beschreibung**

Die Erfindung betrifft ein Verfahren und eine Vorrichtung zur Herstellung eines aus einem Metallprofil bestehenden Rundkörpers, insbesondere einer Radfelge, wobei der Rundkörper als Strangpreßprofil mit endgültiger Querschnittsform gefertigt und zum Rundkörper gerundet wird, wobei an der Unterseite des Profils ein Ablaufschienenprofil mit einstellbarer Kraft an das Profil angepresst wird und der Rundkörper schließlich im Schließstoß durch eine Schweissung verbunden wird.

Ein derartiges Verfahren beschreibt die DE-A-3 028 956. Dort wird auf einen einzigen, rund ausgebildeten Biegekern das Strangpreßprofil aufgespannt und um diesen Biegekern herumgebogen. Dabei wird durch Reibung zwischen Bremsbacken und dem Werkstück die zum Biegen erforderliche Vorspannung erzeugt. Hieran ist es aber nachteilig, daß dieses Verfahren arbeitsaufwendig und maschinenaufwendig ist. Das zu biegende Profil muß nämlich zuerst auf einer ersten Vorrichtung vorgebogen werden, um dann auf eine zweite Vorrichtung übertragen zu werden, wo das Profil fertig gebogen wird. Die Übertragung von der ersten Vorrichtung auf die zweite Vorrichtung ist zeitaufwendig und die Verwendung zweier verschiedener Vorrichtungen kostenaufwendig. Im übrigen ist die durch Reibung erzeugte Vorspannung am Werkstück nicht leicht kontrollierbar.

Die DE-B-1 157 885 beschreibt eine Vorrichtung zum Streckbiegen, wobei eine Einspannstelle längs einer Wickelbahn verschiebbar ist.

Die Erfindung geht aus von einem Verfahren zur Herstellung eines aus einem Metallprofil bestehenden Rundkörpers, insbesondere einer Radfelge, wobei der Rundkörper als Strangpressprofil mit endgültiger Querschnittsform gefertigt und zum Rundkörper gerundet wird, wobei an der Unterseite des Profils ein Ablaufschienenprofil mit einstellbarer Kraft an das Profil angepresst wird und der Rundkörper schließlich im Schließstoß durch ein Schweißwerkzeug verbunden wird.

Ausgehend von diesem Verfahren liegt der Erfindung die Aufgabe zugrunde, dieses so weiterzubilden, daß das Biegen des Rundkörpers schnell, kostengünstig und genau erfolgt.

Zur Lösung dieser Aufgabe ist das erfindungsgemässe Verfahren dadurch gekennzeichnet, daß das gerade ausgebildete Profil einstellbar auf Zug vorgespannt und anschließend gerundet wird, wobei

a₁)    das gerade ausgebildete Profil an seinen beiden freien Enden zwischen Einspannwerkzeugen, bestehend aus jeweils einer Einspannmatritze und einem gegenüberliegenden Einspannstempel eingespannt wird,

a₂)    daß beide Einspannwerkzeuge auseinander bewegt werden, wobei das Profil in Richtung seiner Längsachse auf Zug vorgespannt wird,

b₁)    daß mindestens das eine Ende des unter Vorspannung stehenden Profils am Außenumfang eines Abrollwerkzeuges befestigt wird,

b₂)    daß mindestens das am einen Ende des Profils befestigte Abrollwerkzeug eine Drehbewegung im Sinne einer Wickelbewegung ausführt und das unter Vorspannung stehende Profil um den Außenumfang herum aufwickelt,

b₃)    und daß nach erfolgtem Wickelvorgang das Abrollwerkzeug aus dem rundgebogenen Profil entfernt wird.

Die Erfindung geht weiterhin aus von einer Vorrichtung zur Herstellung eines aus einem Metallprofil bestehenden Rundkörpers, insbesondere einer Radfelge, mit einem Abrollwerkzeug, um dessen Umfang herum ein Metallprofil gewickelt werden kann und mit einer dem Umfang des Abrollwerkzeuges zugeordneten Einspannmatritze sowie einem Einspannmittel, bestehend aus einem ihr gegenüberliegenden Einspannstempel, womit das Ende des Metallprofils eingespannt werden kann.

Zur Lösung der erwähnten Aufgabe ist diese Vorrichtung erfindungsgemäss dadurch gekennzeichnet, daß zum Einspannen des anderen Endes des Metallprofils zweite Einspannmittel, bestehend aus einer zweiten Einspannmatritze, sowie einem zweiten ihr gegenüberliegenden Einspannstempel vorhanden sind, und wobei die dem Umfang des Abrollwerkzeugs zugeordneten Einspannmittel gegenüber dem zweiten Einspannmittel im Abstand einstell- und verstellbar sind, und wobei das Abrollwerkzeug in Längsrichtung eines Abrollschienenprofils abrollbar vorgesehen ist.

Das als gerades Teil (z. B. als Strangpreßprofil aus einer Aluminiumlegierung) bestehende Profil wird also an seinen beiden Endstücken zwischen zugeordneten Einspannwerkzeugen eingespannt. Die beiden Einspannwerkzeuge werden in Richtung der Längsachse des Profils voneinander wegbewegt, so daß das Profil in Richtung seiner Längsachse auf Zug vorgespannt wird. Dieser Zug bleibt während des gesamten Abroll-Biegevorgangs beibehalten und hat den Zweck, die bei der Biegung entstehenden Schubspannungen auszugleichen, um ein verzugsfreies Biegen zu erreichen. Zu dem gleichen Zweck ist nach der Erfindung vorgesehen, daß an der Unterseite des Profils, also in Gegenüberstellung zum Abrollwerkzeug, ein Ablaufschienenprofil mit einstellbarer Kraft an das Profil angepresst wird.

Zur Durchführung des Abroll-Biegevorganges gibt es nun mehrere verschiedene Ausführungsformen. Eine erste Ausführungsform besteht darin, daß das Profil an seinen beiden Endstücken am Außenumfang jeweils eines halbrund ausgebildeten Abrollwerkzeuges eingespannt wird, wobei die beiden Abrollwerkzeuge zunächst das Profil einem Vorspannvorgang unterwerfen und dann eine Rotationsbewegung in Verbindung mit einer translatorischen Bewegung in Richtung zu einer gemeinsamen Mittenquerachse durchführen und das am Außenumfang eingespannte Profil während der Abrollbewegung dieser beiden Abrollwerkzeuge am Außenumfang der Abrollwerkzeuge abgebogen wird.

Die Einspannwerkzeuge sind also hierbei mit den Abrollwerkzeugen verbunden, so daß im Sinne der vorstehenden Beschreibung die Abrollwerkzeuge selbst in Verbindung mit den Einspannwerkzeugen die zur Biegung erforderliche Vorspannung aufbringen.

Beide Abrollwerkzeuge vereinigen sich dann nach Beendigung des Biegevorganges zu einem einzigen, rotationssymmetrischen Körper, der im Innenraum des fertiggestellten Rundkörpers angeordnet ist. Um die Abrollwerkzeuge aus dem Innenraum nach erfolgtem Biegevorgang herausziehen zu können, sind diese zweifach oder mehrfach geteilt.

Wesentlich ist, daß die Abrollbewegung der Abrollwerkzeuge längs der Profilbahn eines Ablaufschienenprofils erfolgt, das mit vorgegebener Kraft gegen den Außenumfang der sich auf dem Ablaufschienenprofil abwälzenden Abrollwerkzeuge gepreßt wird. Im Zwischenraum zwischen dem Außenumfang der Abrollwerkzeuge und dem Ablaufschienenprofil wird das herzustellende Profil zu einem Rundkörper gebogen. Vorteil des erfindungsgemäßen Verfahrens ist, daß das zunächst gerade ausgebildete Profil von beiden Enden anfangend (aufgrund der anliegenden Vorspannung) gleichmäßig einwärts gebogen wird, wodurch sich bezüglich der Umformungsarbeit im Vergleich zu dem bekannten Verfahren die halbe Produktionsgeschwindigkeit ergibt, wo das Profil bekannterweise nur an einem Ende eingespannt wird und um dann einen sich drehenden Kernbiegekörper herumgebogen wird. Mann kann das beschriebene Biegeverfahren auch als Abroll-Streck-Biegeverfahren bezeichnen, denn die zu biegenden Profile werden am Außenumfang der Abrollwerkzeuge notwendigerweise einem Streckvorgang unterworfen, um eine gleichbleibende Verformung zu erreichen. Die während des Biegevorganges auf das Profil aufgebrachte Zugspannung liegt dabei jedoch - bei geradem Profil überwiegend und variabel - unterhalb der Streckgrenze.

Bei dem bisher bekannten Biegeverfahren waren spiegelbildliche Verhaltensweisen des zu biegenden Profils nicht gegeben, während bei der vorliegenden Erfindung das Profil genau spiegelbildlich in Bezug zu seiner Mittenquerachse gebogen wird, wodurch schon eine bessere Rundheit des Profils erzielt wird. Die Formsymmetrie ist hier also in idealer Weise erreicht. Bei den bisher bekannten Verfahren konnte diese ideale Formsymmetrie nicht erreicht werden. Es mußte daher ein Nachrollvorgang nachgeschaltet werden, um diese gewünschte Formsymmetrie zu erreichen. Nach der Erfindung wird diese Formsymmetrie bereits schon durch den Ablaufvorgang der Abrollwerkzeuge erzielt. Nachdem das Profil ständig unter Vorspannung gebogen wird, ergeben sich ideale Rundlaufeigenschaften, ohne daß es einer Nachbearbeitung, z. B. durch einen nachgeschalteten Rollvorgang, bedarf.

Bei einem Verfahren gemäß der vorliegenden Erfindung ist es ferner möglich zwei verschiedenen Biegeverfahren in einer einzigen Maschine zu vereinigen. Das ist erstens das Rollenbiegen und zweitens das Kernstreckbiegen. Der erste Verfahrensschritt bezieht sich auf ein Vorspannverfahren, was dadurch gekennzeichnet ist, daß nach dem Einspannen des gerade ausgebildeten Profils dieses Profil zunächst vorgespannt wird, um dann unter Beibehaltung der Vorspannung in einem zweiten Verfahrensschritt im gestreckten und festgehaltenen Zustand dem Kernstreckbiegen unterworfen zu werden. Diese drei Verfahrensschritte ergeben das erfindungsgemäße Abrollstreckbiegeverfahren.

Mit dem Vorspannen des Profils und dem nachfolgenden Abrollstreckbiegevorgang wird der wesentliche Vorteil erzielt, daß das Material aufgrund des vorher durchgeführten Vorspannvorgangs sowie der Profilumfassung durch Rollkern und Profilschiene sich nicht im Querschnitt deformieren kann, und hierdurch auch relativ komplizierte Profilformen mit hoher Genauigkeit gebogen werden können, wobei auch kleine Durchmesser mit schwierigen Profilquerschnitten gebogen werden können. D.h. also die Umformungsgröße, das ist das Verhältnis von Profiltiefe zu Biegedurchmesser, kann relativ ungünstig liegen und trotzdem ist ein exakter Biegevorgang möglich, weil das Profil im Augenblick der Umformung gleichzeitig noch von Rollkern und Profilschiene gestützt gehalten ist. Die Vorspannung ist hierbei stets einstellbar, um diese an verschiedene Werkstoff-Kennwerte der zu biegenden Materialien anzupassen.

Eine weitere Ausführungsform nach der Erfindung sieht vor, daß die den Abrollstreckbiegevorgang im eigentlichen ausführende Wickelbewegung nur von einem einzigen Abrollwerkzeug ausgeführt wird, welches drehbar, jedoch mit örtlich feststehender Achse, an einem Maschinengestell befestigt ist, während das gegenüberliegende, andere Abrollwerkzeug lediglich parallel zur Längsachse des Profils und der Ablaufschiene bewegbar ist. Hierdurch kann eine wesentliche Vereinfachung der Biegemaschine erreicht werden, weil eben nur ein einziges Abrollwerkzeug in Längsrichtung des Ablaufschienenprofils bewegbar ausgebildet sein muß, während das andere Abrollwerkzeug lediglich drehbar, jedoch mit räumlich feststehender Achse, ausgebildet ist.

Eine dritte Ausführungsform sieht vor, daß überhaupt nur ein einziges Abrollwerkzeug besteht, welches mit räumlich festgehaltener Achse drehbar ausgebildet ist, und die Wickelbewegung zum Aufwickeln des Profils ausführt. Das gegenüberliegende Endes des Profils wird hierbei von einem Einspannwerkzeug festgehalten, welches auch die in Längsrichtung des Profils wirkende Zugspannung auf das Profil aufbringt. Dieses Einspannwerkzeug ist längs der Wickelbahn (also in Richtung der Längsachse des Ablaufschienenprofils) verschiebbar und wird während der Drehbewegung des Abrollwerkzeuges zu diesem unter Beibehaltung seiner Vorspannung hin bewegt. Das Abrollwerkzeug wickelt also vergleichsweise wie eine Schnurhaspel das Einspannwerkzeug zu sich her, wobei das zu biegende Profil als Schnur aufgefaßt werden kann.

Zur Herstellung einer werkstoffeinstückigen Felge, bestehend aus Felgenring und Werkstoff damit einstückig verbundenen Felgenschüssel, wählt man eine Profilschiene, die einen etwa senkrecht davon abragenden Ansatz aufweist. Beim Rundbiegen dieser Profilschiene mit dem erfindungsgemäßen Abroll-Biegevorgang biegt sich der davon senkrecht abragende Schenkel ebenfalls rund und bildet so die radial nach innen ragende Felgenschüssel. Es kommt hierbei zu Materialverdrängungen, die durch Einbringen entsprechender Schlitze, Rippen und dergleichen, kompensiert werden können.

In einer weiteren Ausführungsform ist es möglich, die Felgenschüssel nicht gleich während des Abroll-Biegevorgangs fertig zu biegen, sondern nur einen radial nach innen vorstehenden Ansatz mit dem Abroll-Biegeverfahren herzustellen, wonach dann dieser Ansatz bei fertiggebogenem Felgenring und fertiggestelltem Schweißstoß einem Fließ-Preß-Umformen ausgesetzt wird, so daß nach Beendigung dieses Umformungsvorganges die Felgenschlüssel fertig ausgebildet ist und - nach wie vor - werkstoffeinstückig mit der Innenseite des Felgenringes verbunden ist.

Weitere Merkmale der Erfindung sind Gegenstand der übrigen Unteransprüche.

Im folgenden wird die Erfindung anhand von lediglich mehrere Ausführungswege darstellende Zeichnungen näher erläutert.

Es zeigen:

Fig. 1: schematisiert gezeichnete Darstellung der Bewegungsbahn der Abrollwerkzeuge während des Abrollstreck-Biegeverfahrens,

Fig. 2: Stellung der Abrollwerkzeuge nach dem Einspannen des Profils,

Fig. 3: Stellung der Abrollwerkzeuge nach erfolgtem Streckvorgang,

Fig. 4: (linke Darstellung): Bewegung des linken Abrollwerkzeuges bei einem Biegevorgang von 0° bis 90°,

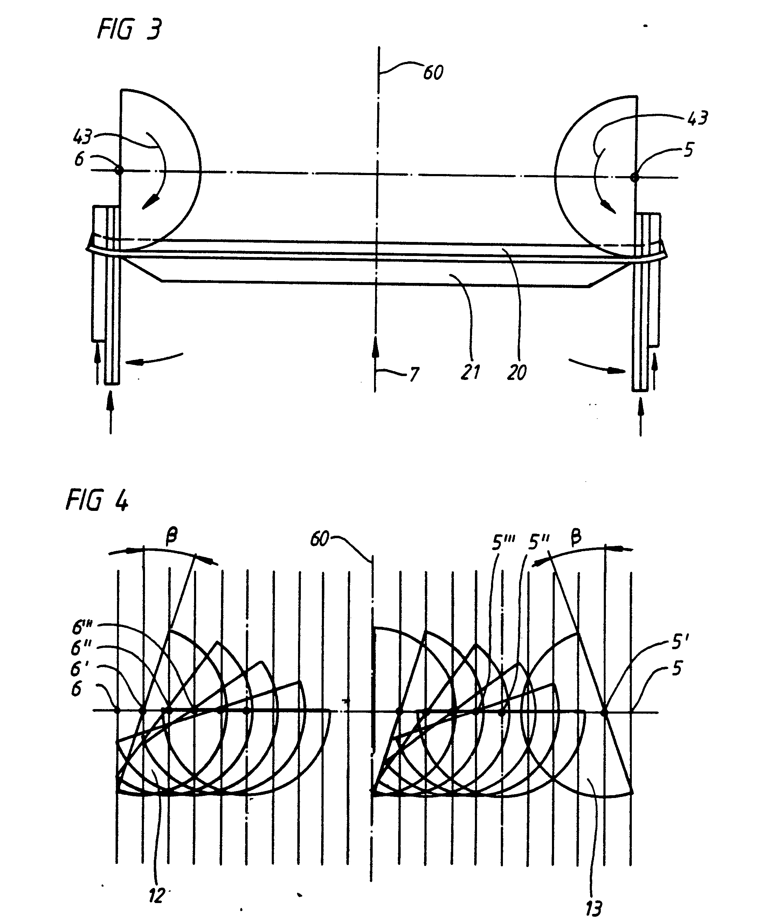

Fig. 4: (rechte Darstellung): Bewegungsbahn des rechten Abrollwerkzeuges bei einem Biegevorgang von 90° bis 180°,

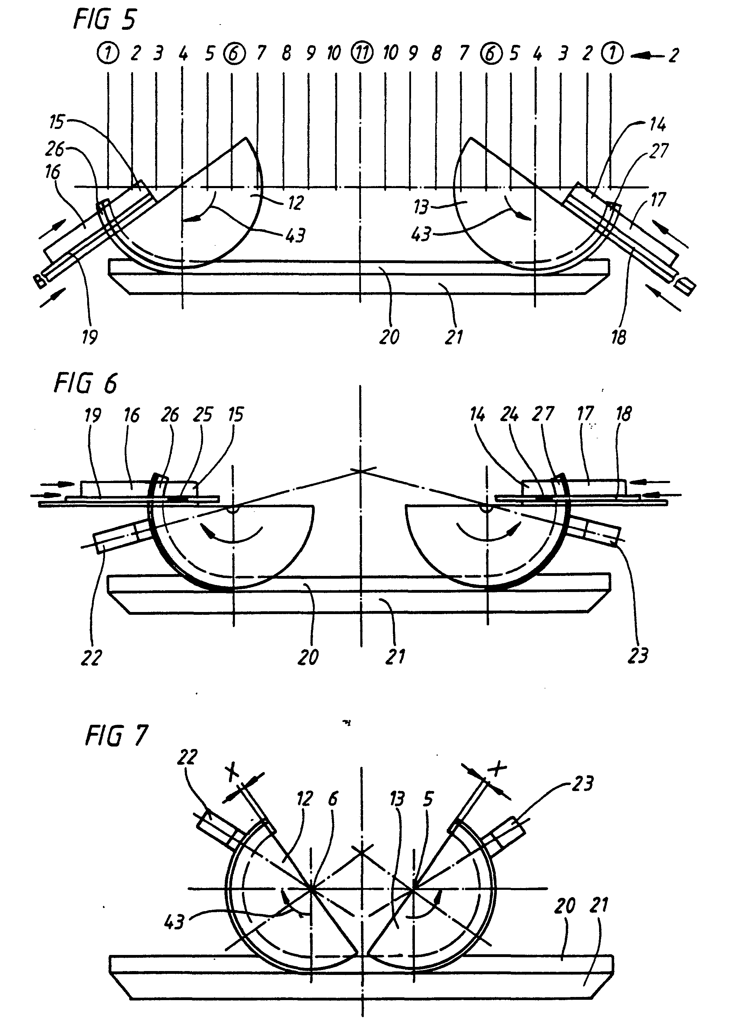

Fig. 5: Stellung der Abrollwerkzeuge während des Biegevorganges im Bereich von 0 bis 90°,

Fig. 6: Stellung der Abrollwerkzeuge nach fertiggebogenem 90°-Winkel mit Darstellung des Abscherens der Einspannenden,

Fig. 7: Stellung der Abrollwerkzeuge im Biegebereich zwischen 90° und 180°,

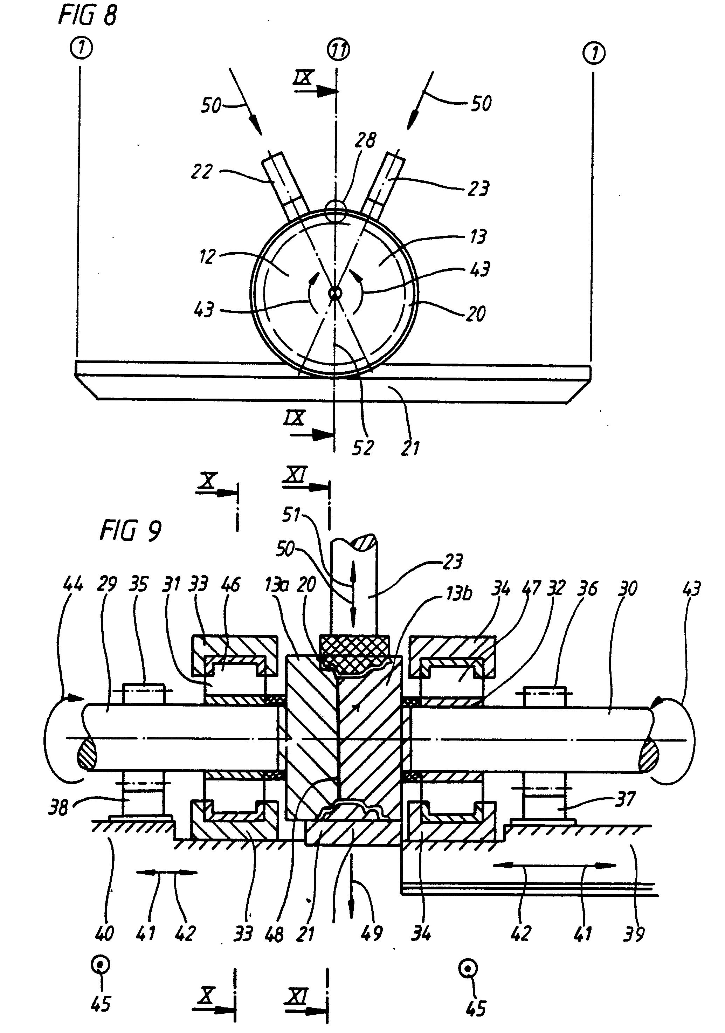

Fig. 8: Stellung der Abrollwerkzeuge bei fertiggebogenem Rundkörper,

Fig. 9: schematisiert gezeichnete konstruktive Ausführung einer Vorrichtung zur Ausführung des Abroll-Streck-Biegeverfahrens,

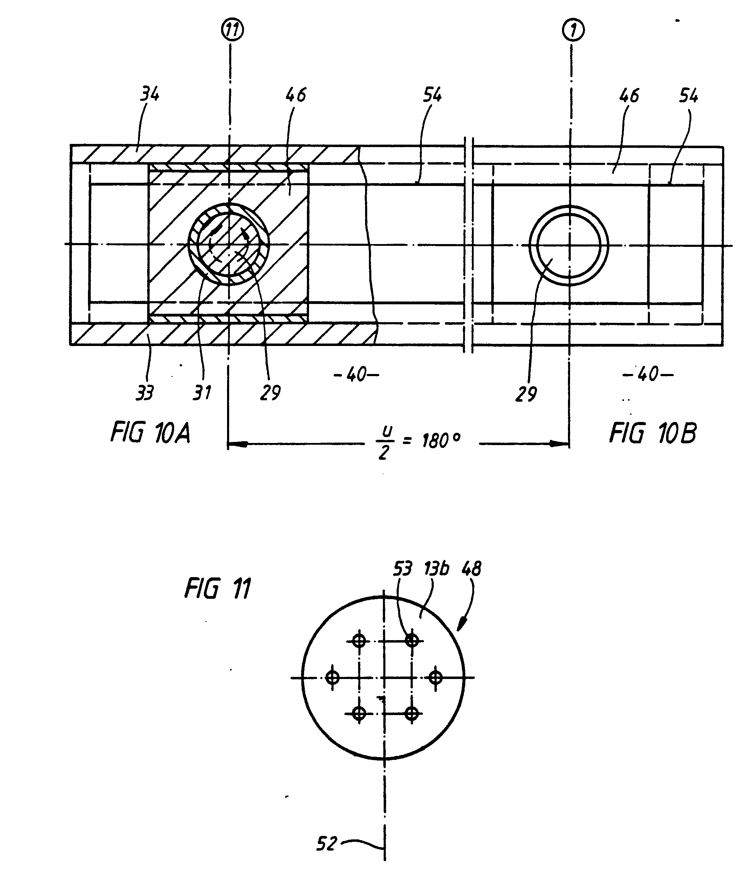

Fig. 10: Schnitt gemäß der Linie X-X in Fig. 9 mit Darstellung von zwei verschiedenen Fahrstellungen des Führungsschlittens, welcher die Abrollwerkzeuge aufnimmt,

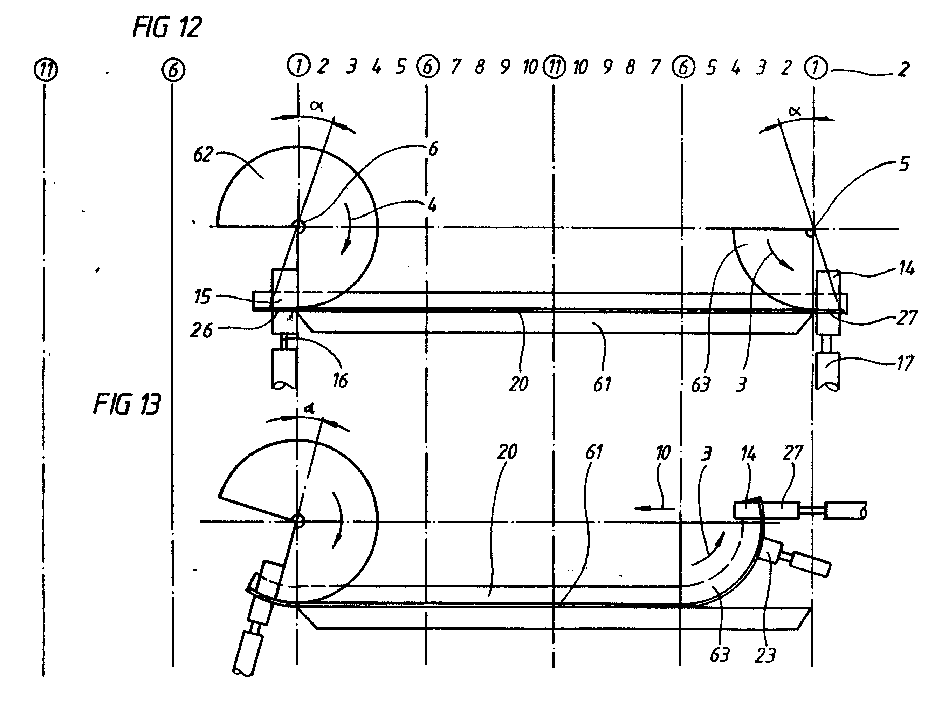

Fig. 11: Schnitt gemäß der Linie XI-XI in Fig. 9 durch die Verbindungsebene des Abrollwerkzeuges nach Fig. 9,

Fig. 12: schematisiert gezeichnete Darstellung eines Abroll-Streck-Biegeverfahrens nach einer weiteren Ausführungsform im Biegestadium,

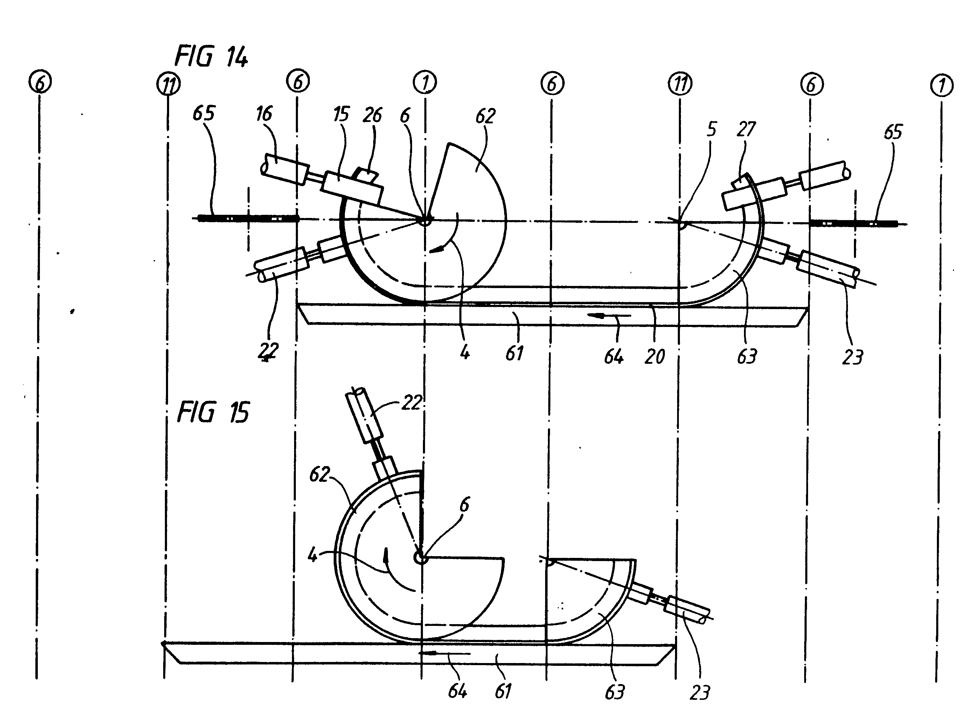

Fig. 13: Stellung der Abrollwerkzeuge nach Fig. 12 nach erfolgtem Anfangsbiegen,

Fig. 14: Stellung der Abrollwerkzeuge nach Fig. 12 mit weiter fortschreitendem Biegen,

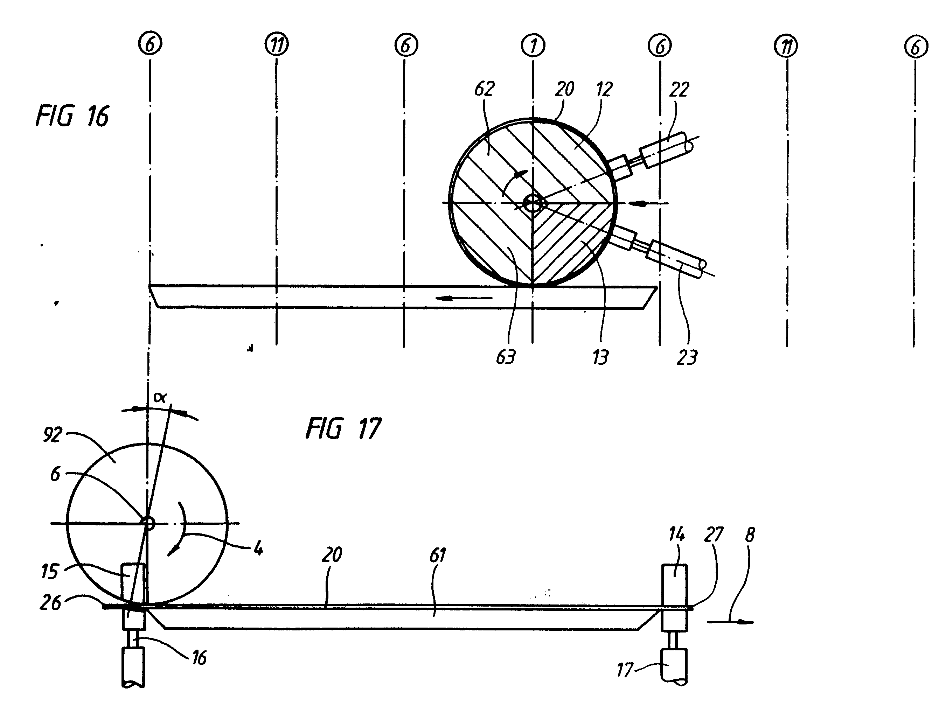

Fig. 15: Stellung der Abrollwerkzeuge kurz vor Beendigung des Biegevorganges,

Fig. 16: Stellung der Abrollwerkzeuge nach vollendetem Biegevorgang,

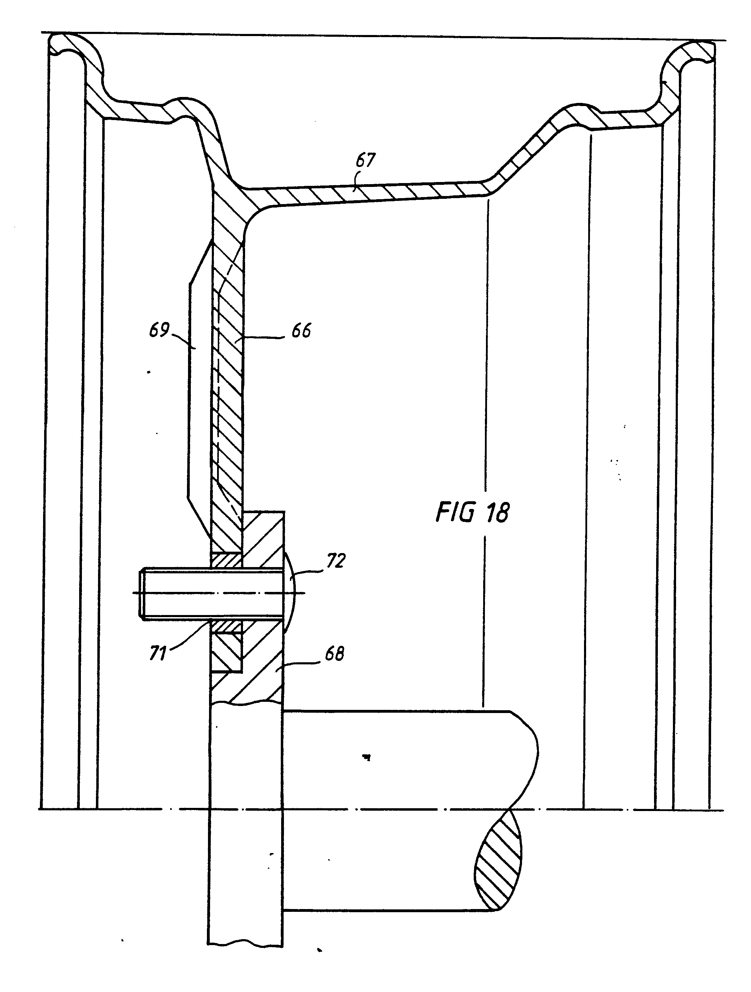

Fig. 17: eine dritte Variante zur Ausführung des Abroll-Streck-Biegeverfahrens,

Fig. 18: eine mit dem Abroll-Streck-Biegeverfahren hergestellte Komplettfelge nach einer ersten Ausführungsform,

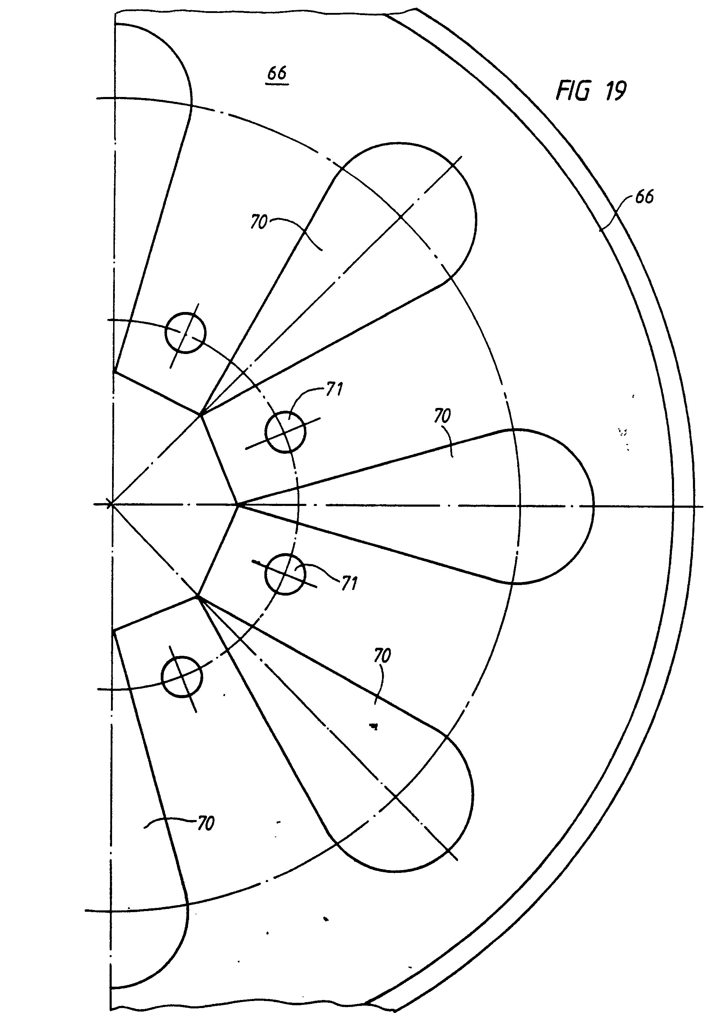

Fig. 19: Draufsicht auf die Felgenschlüssel einer Komplettfelge nach Fig. 18 nach erfolgtem Biegevorgang,

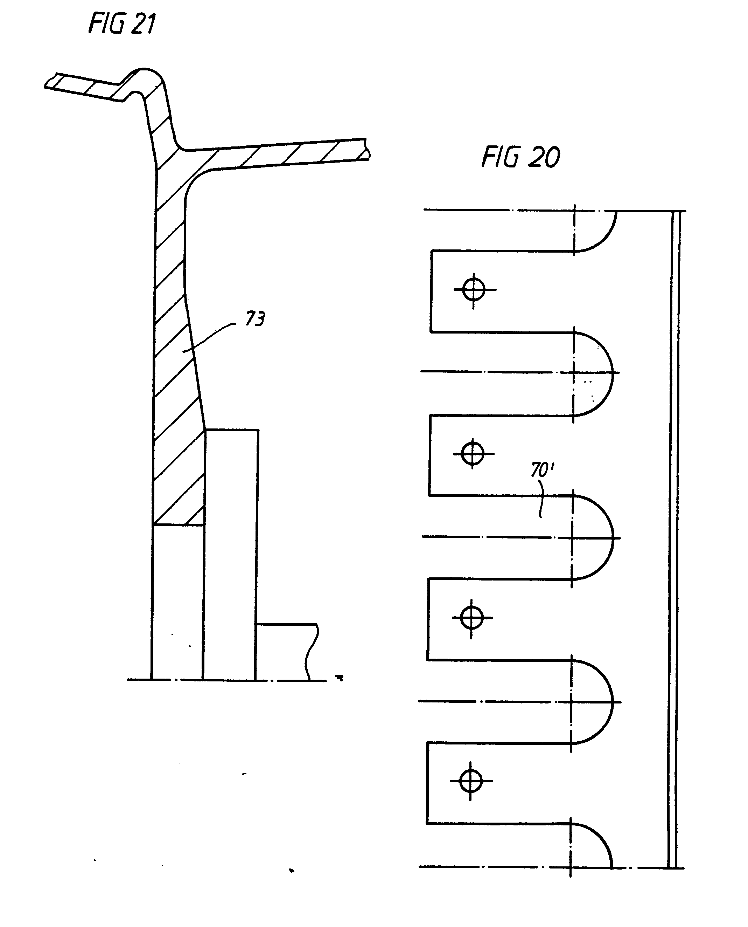

Fig. 20: Draufsicht auf den Ansatz mit eingebrachten Ausnehmungen, der nach erfolgtem Biegevorgang die Felgenschlüssel nach Fig. 19 bildet,

Fig. 21: Seitenansicht und teilweiser Schnitt durch eine Komplettfelge nach einer zweiten Ausführungsform,

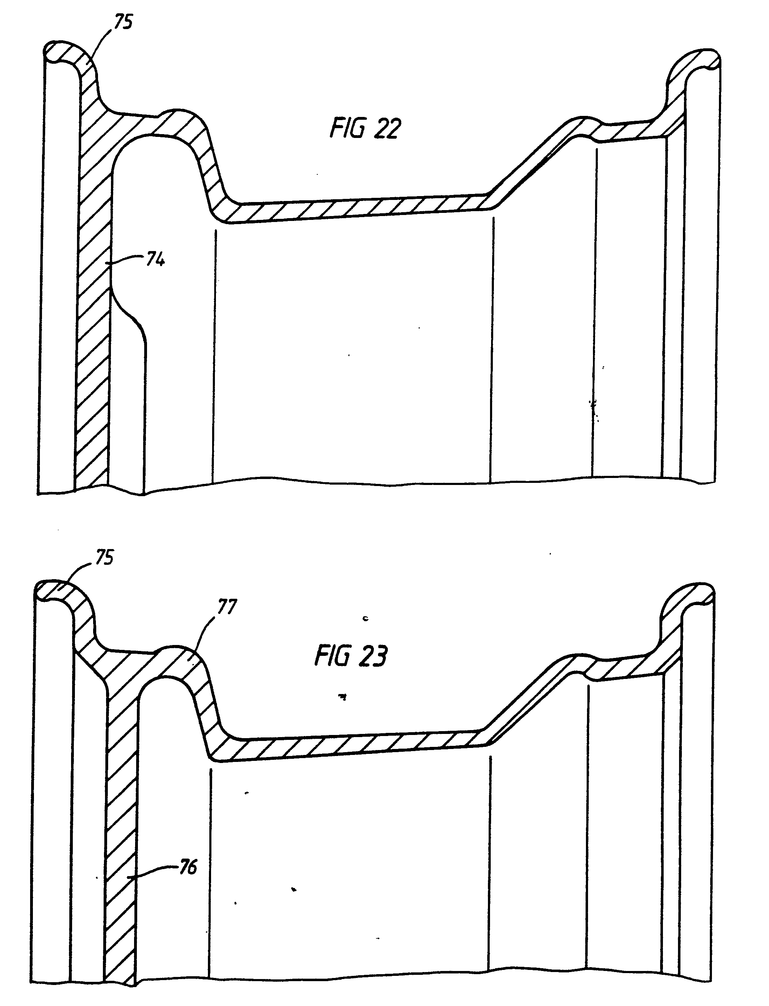

Fig. 22: Seitenansicht einer Komplettfelge in einer dritter Ausführungsform,

Fig. 23: Seitenansicht einer Komplettfelge in einer vierten Ausführungsform,

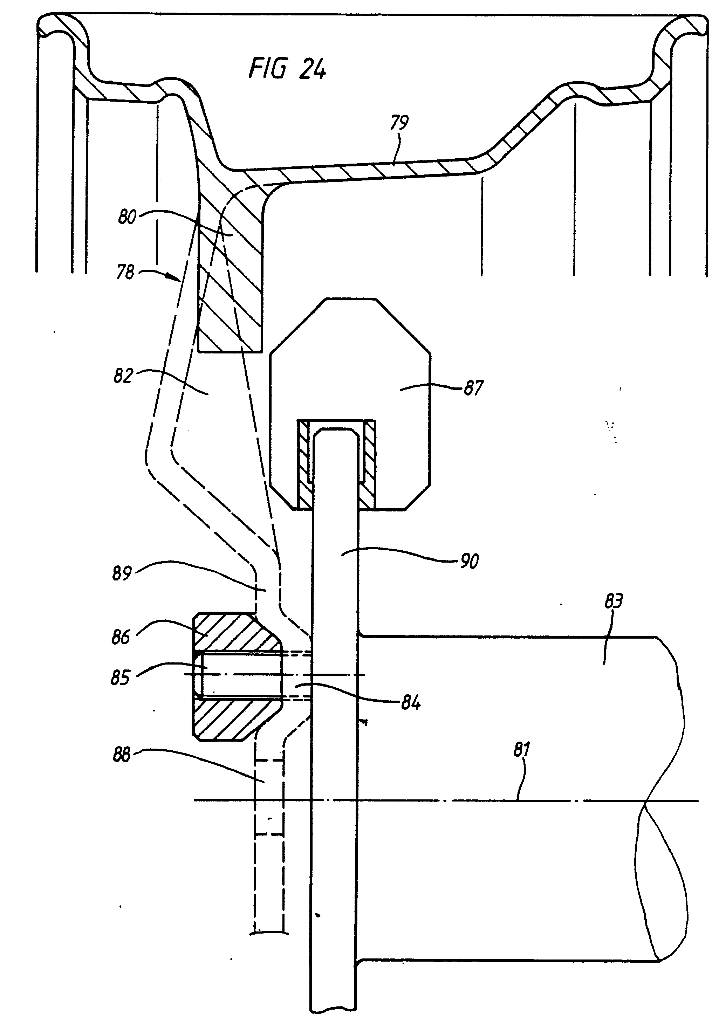

Fig. 24: Seitenansicht und teilweiser Schnitt einer Komplettfelge in einer fünften Ausführungsform.

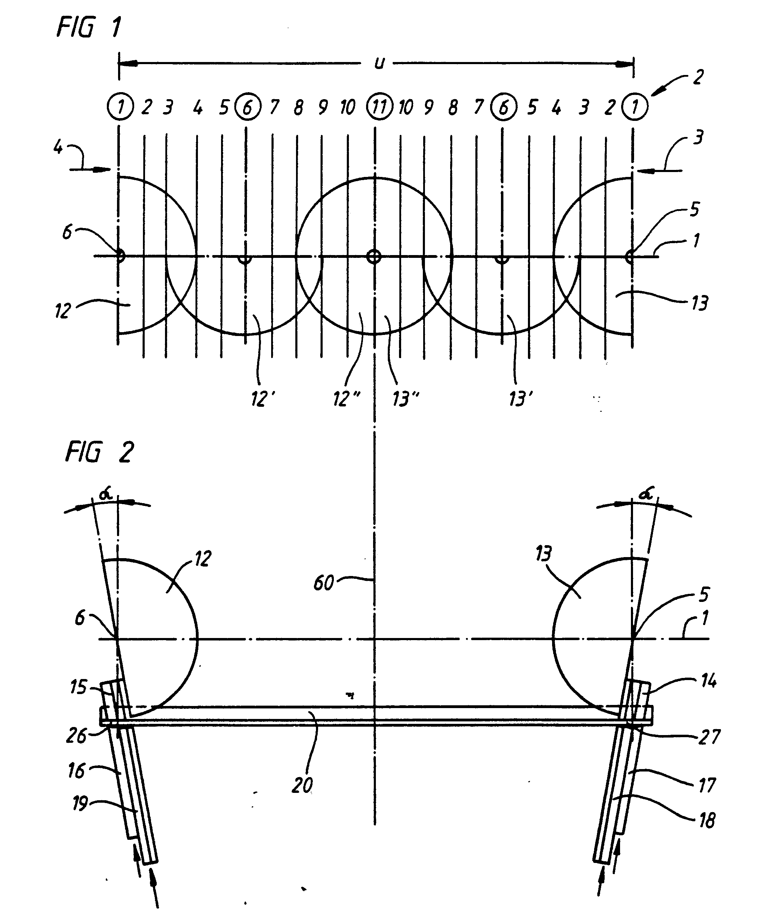

In den Figuren 1 - 8 sind auf der Achse 2 Positionsmarkierungen 1 bis 11 angegeben. Die Position 1 bezeichnet den Biegewinkel 0, während die Position 11 den Biegewinkel von 180° bezeichnet. Die Positionen sind örtliche Markierungen längs der Abszisse, um den Bewegungsablauf der beiden Abrollwerkzeuge besser verfolgen zu können.

In Fig. 1 ist gezeigt, daß auf einer Abrollebene 1 zwei halbkreisförmige Abrollwerkzeuge 12, 13 sich im Abstand bei Position 1 gegenüberstehen.

Der Abstand der Mittelpunkte der Abrollwerkzeuge 12, 13 entspricht genau dem Umfang U des später herzustellenden Rundkörpers.

Ferner ist gezeigt, daß die beiden Abrollwerkzeuge 12, 13 eine aufeinander zugehende Bewegung in Richtung zu einer gemeinsamen Mittenquerachse 60 (bei Position 11) in Pfeilrichtung 3 bzw. 4 durchführen, wobei die Abrollwerkzeuge 12, 13 gleichzeitig eine Drehbewegung durchführen. Jedes Abrollwerkzeug ist in drei verschiedenen Phasen gezeigt, nämlich in der Grundstellung, welche ohne "Strich" gezeigt ist, sowie in einer Zwischenstellung 12' bzw. 13', welche die um 90° gebogene Stellung zeigt, sowie in der fertiggebogenen Stellung, die mit der Position 12'', 13'' gezeichnet ist.

Die Abrollwerkzeuge 12, 13 ergänzen sich also nach Beendigung des Abroll-Streck-Biegevorganges zu einem einheitlichen Rundkörper mit dem Umfang U. Auf dem Außenumfang dieses Rundkörpers ist dann das fertiggebogene Profil aufgespannt, wie es nachfolgend erläutert wird.

Gemäß Fig. 2 wird bei Durchführung des Abroll-Biegeverfahrens zunächst das Profil 20 vorgespannt. Hierzu wird das gerade ausgebildete Profil 20 am Außenumfang jeweils des Abrollwerkzeuges 12, 13 eingespannt. Von oben her wird das Profil jeweils in eine Einspannmatritze 14, 15 und von unten her wird dagegen ein Einspannstempel 16, 17 angelegt, so daß das jeweilige Ende des Profils 20 fest mit dem Außenumfang des Abrollwerkzeuges 12, 13 verbunden ist. Die in Fig. 2 unten gezeigten Pfeile bedeuten einerseits die Spannrichtung des Einspannstempels 16, 17 und andererseits die Schneidrichtung des später zu beschreibenden Schermessers 18, 19.

Wichtig bei dieser Ausführung ist, daß die Abrollwerkzeuge 12, 13 zunächst um den Winkel α nach außen hin gedreht werden, und dann beim Übergang nach Fig. 3 bei örtlich festgehaltenen Achse 5, 6 in Pfeilrichtung 43 auswärts gedreht werden, so daß - wegen der bei Position 1 festgehaltenen Achse 5, 6 - das Profil 20 in seiner Längsrichtung mit einstellbarer Kraft vorgespannt wird.

Hiermit ist der wesentliche Vorteil verbunden, daß während des Abroll-Biegevorganges sonst vorkommende Deformationen vermieden werden, weil hierdurch das Widerstandsmoment des Profilquerschnitts überwunden wird.

Die beiden Abrollwerkzeuge 12, 13 führen dann eine rotatorische Bewegung in den Pfeilrichtung 3, 4 durch, wobei auf der Achse 2 in Fig. 1 die verschiedenen Positionen der Abrollwerkzeuge näher dargestellt sind. Die örtlich bei Position 1 festgehaltenen Achsen 5, 6 werden also deblockiert, so daß beide Abrollwerkzeuge neben der Rotation eine zusätzliche translatorische Bewegung längs der Abrollebene 1 vollziehen

In Fig. 4 ist erkennbar, wie diese kombinierte Abroll- und translatorische Bewegung der beiden Abrollwerkzeuge 12, 13 aussieht; das linke Bild der Fig. 4 zeigt lediglich die Bewegung des Abrollwerkzeuges 12 von der Position 1 bis Position 6 (Achse 2 in Fig. 1), während das rechte Bild in Fig. 4 die Bewegung des Abrollwerkzeuges 13 von Position 6 bis Position 11 (Achse 2 in Fig. 1) zeigt. Die Abrollbewegungen der beiden Abrollwerkzeuge 12, 13 sind jedoch zueinander vollständig symmetrisch.

Der Winkel β soll gegenüber dem Winkel α in Figur 2 verdeutlichen, daß bei einer weiteren Drehbewegung, wie sie in Fig. 4 dargestellt wird, die Achse 5, 6 nicht mehr festgehalten wird, sondern die Stellungen 6', 6'', 6''' und so weiter einnimmt; das heißt, eine translatorische Bewegung in Richtung zur Mitten-Querachse 60 ausführt, gleiches gilt für die rechte Achse 5.

In Fig. 3 ist noch wichtig, daß während des gesamten unter Vorspannung stehenden Biegevorganges an die Unterseite des Profils 20 ein gerade ausgebildetes Ablaufschienenprofil 21 angelegt wird, um während des Biegevorganges eventuell noch mögliche Deformierungen des Profilquerschnittes zu vermeiden. Das Ablaufschienenprofil 21 entspricht hierbei im Querschnitt dem Querschnitt des zu biegenden Profils 20, so daß das zu biegende Profil 20 formschlüssig in das Ablaufschienenprofil 21 eingelegt ist. Wichtig ist hierbei, daß das Ablaufschienenprofil 21 in Pfeilrichtung 7 gegen die Unterseite des zu biegenden Profils 20 angedrückt wird, wobei das Ablaufschienenprofil 21 stets an die Unterseite des Abrollwerkzeuges 12, 13 ebenfalls angepreßt wird, so daß eine formschlüssige Verbindung zwischen dem Abrollwerkzeug 12, 13 einerseits und dem Ablaufschienenprofil 21 andererseits erreicht wird.

Das Ablaufschienenprofil bildet somit eine feststehende Biegebahn für das darauf abzubiegende Profil 20. Die Fig. 5 zeigt das weitere Fortschreiten des Abroll-Biegevorganges, wobei die Abrollwerkzeuge 12, 13 in den Pfeilrichtungen 43 weitergedreht wurden und die Achse 5 bzw. 6 jetzt die Position 4 (auf der Abszisse 2) erreicht haben. Das Ablaufschienenprofil 21 wird hierbei mit einer konstanten Kraft weiterhin an die Unterseite der Abrollwerkzeuge 12, 13 angepreßt.

Fig. 6 zeigt, daß bei Position 6 am Außenumfang des Profils 20 zwischen dem Einspannende 26, 27 und der Oberseite des Ablaufschienenprofils 21 ein weiterer Einspannstempel 22, 23 vorgesehen ist, der sich jetzt klemmend an das Profil 20 anlegt und die Einspannschraube der noch eingespannten Einspannstempel 16, 17 in Verbindung mit der Einspannmatritze 14, 15 übernimmt.

Nach erfolgtem Spannen mit den Einspannstempeln 22, 23 bleiben die Einspannvorrichtungen 16, 17 und 14, 15 noch weiterhin gespannt; gleichzeitig wird das Schermesser 18, 19 in der eingezeichneten Pfeilrichtung einwärts bewegt und es wird aus dem Einspannende 26, 27 ein Stanzstück 24, 25 ausgestanzt, wodurch das Einspannende 26, 27 von dem Profil 20 abgetrennt wird.

In analoger Anwendung des hier vorbeschriebenen Vorgangs ist es selbstverständlich auch möglich, statt eines Stanzens mit einem Schermesser 18, 19 auch ein Schneiden oder ein Scheren vorzusehen.

Ebenso ist es möglich, statt der beschriebenen Abtrennungsvorgänge auch einen Sägevorgang zu verwenden.

Wichtig ist noch, festzustellen, daß sowohl die Teile 14, 15 und 16, 17 sowie der Einspannstempel 22, 23 stets bei der Drehbewegung in Pfeilrichtung 43 mitlaufen. Nach dem erfolgten Trennungsvorgang, d.h. nach dem erfolgten Abtrennen des Einspannendes 26, 27 werden jedoch die Einspannmatritzen 14, 15 und der Einspannstempel 16, 17 zusammen mit dem Schermesser 18, 19 aus der Ablaufebene der Abrollwerkzeuge 12, 13 entfernt und laufen nicht weiter mit.

Die Einspannstempel 22, 23 führen jedoch die weitere Drehbewegung mit aus, weil sie das Profil 20 am Außenumfang der Abrollwerkzeuge 12, 13 weiterhin festklemmen.

In Fig. 7 ist das weitere Fortschreiten des Abrollbiegevorganges gezeigt, wo ersichtlich ist, daß die beiden Achsen 5, 6 jetzt die Position 9 auf der Abszisse 2 in Fig. 5 erreicht haben und daß das jeweilige Abrollwerkzeug 12, 13 nun nahezu an seinem Endpunkt des Biegevorganges angelangt ist.

Wichtig in Fig. 7 ist noch, daß das Schermesser 18, 19 jeweils einen Überstand x am freien, hinteren Ende des Profils 20 freiläßt. Dieser Überstand x wird für ein später zu verwendendes Warmpreß-Schweißen der beiden zusammengefügten Enden im Bereich des Schließstoßes 28 (vergl. Fig. 8) verwendet. Der Überstand x kann je nach der Art des verwendeten Schweißverfahrens beliebig lang gewählt werden. Statt des Warmpreß-Schweißens ist es auch möglich, ein entsprechendes Abbrennstumpf-Schweißen bzw. Elektronenstrahlschweißen oder ein Kaltpreßschweißen zu verwenden.

Die Fig. 8 zeigt das fertiggerundete Profil 20, wobei ersichtlich ist, daß die beiden Abrollwerkzeuge 12, 13 nun einen genau rotationssymmetrischen Körper ergeben, und im Bereich ihrer Verbindungsebene 52 zusammengefügt sind. Die beiden Abrollwerkzeuge 12, 13 sind also genau bezüglich der Verbindungsebene 52 spiegelsymmetrisch.

Der Schließstoß 28 ist nun zusammengefügt, so daß ein vorher beschriebenes Schweißverfahren angewendet werden kann. Wichtig ist, daß die beiden Einspannstempel 22, 23 noch in Pfeilrichtung 50 ihre Spannkraft ausüben. Das Profil 20 ist nun - wie vorher beschrieben - fertig gerundet und wird nun im Bereich des Schließstoßes 28 zu einem einheitlichen Körper verbunden. Jetzt besteht das Problem, daß man die Abrollwerkzeuge 12, 13 aus dem insich geschlossenen Profil 20 entfernen muß.

Wie dies im einzelnen geschieht, wird anhand der Fig. 9 erläutert, die einen Schnitt gemäß der Linie IX-IX in Fig. 8 zeigt und den Schnitt durch die Verbindungsebene 52 der beiden Abrollwerkzeuge 12, 13 darstellt.

Hieraus läßt sich auch die weitere konstruktive Ausgestaltung der beschriebenen Abrollstreckbiegevorrichtung entnehmen.

Jedes Abrollwerkzeug 12, 13 besteht aus einem zweiteiligen Stück, wobei anhand der Fig. 9 lediglich das Abrollwerkzeug 13 gezeigt ist. Nachdem das Abrollwerkzeug 12 genau identisch wie das Abrollwerkzeug 13 ausgebildet ist, wird der Einfachheit halber nur das Abrollwerkzeug 13 näher beschrieben. Es besteht aus den Teilen 13a und 13b.

Jedes Teil 13a, 13b ist jeweils drehfest mit einer Antriebswelle 29, 30 verbunden. Die Antriebswelle 29, 30 wird jeweils in den Pfeilrichtungen 43, 44 drehend angetrieben. Dieser Drehantrieb ist nicht weiter dargestellt.

Drehfest mit jeder Antriebswelle 29, 30 ist ein Ritzel 36 verbunden, welches mit einer Zahnstange 37, 38 kämmt. Die Zahnstange 37, 38 steht mit ihrer Längsachse senkrecht zur Zeichenebene der Fig. 9 und bei Drehung der Antriebswelle 29, 30 bewegt sich die gesamte Antriebswelle 29, 30 zusammen mit den Teilen 13a, 13b des Abrollwerkzeuges 13 aus der Zeichenebene der Fig. 9 in Pfeilrichtung 45 heraus. Hierzu ist eine senkrecht zur Zeichenebene in Fig. 9 notwendige transversale Führung der Antriebswellen 29, 30 notwendig. Diese Führung wird gemäß Fig. 9 und 10 dadurch erreicht, daß auf der Antriebswelle 29, 30 drehfest eine Lagerbüchse 31, 32 angebracht ist, die ihrerseits fest mit einem Lagerschlitten 46, 47 verbunden ist, der senkrecht zur Ebene der Fig. 9 bewegbar ist. Der Lagerschlitten ist an seiner Außenseite mit einer Führungsschiene 33, 34 verbunden, die an dieser Bewegungsrichtung nicht verschiebbar ist, d.h. also feststeht.

Ferner ist in Fig. 9 sichtbar, wie der Einspannstempel 23 in Pfeilrichtung 50 klemmend auf das Profil 20 preßt, oder in Gegenrichtung hierzu in Pfeilrichtung 51 vom Profil dann nach erfolgtem Biegevorgang angehoben wird.

Wesentlich bei der Darstellung in Fig. 9 ist, daß zum Entfernen der Abrollwerkzeuge 12, 13 nun jeweils das Abrollwerkzeug aus der insich geschlossenen Profilform 20 herausgezogen werden muß, und zwar in den Pfeilrichtungen 41, 42.

Hierzu ist es vorgesehen, daß der linke Teil 13a mit seiner daran ansetzenden Antriebswelle 29 eine geringere axiale Bewegung ausführt, um ein geringeres axiales Stück in Pfeilrichtung 41 als der rechte Teil des Abrollwerkzeuges 13b, der in Pfeilrichtung 41, 42 eine größere, axiale Bewegung durchführt, entsprechend der Profilseite des Profils 20. Das Abrollwerkzeug 12, 13 besteht also aus den Teilen 13a, 13b, die in der Verbindungsebene 48 zusammenhängen und durch irgendwelche, nicht näher dargestellten Hilfsmittel zusammengefügt sind. Die Verbindungsebene 48 ist nicht identisch mit der Verbindungsebene 52, die anhand der Fig. 8 erläutert wurde, sondern sie steht zu dieser Verbindungsebene 52 senkrecht.

Es handelt sich also insgesamt um ein viergeteiltes Biegewerkzeug, wobei jedes Abrollwerkzeug 12, 13 jeweils aus zwei Teilen besteht.

Zur Freigabe des gebogenen Profils 20 wird nun eine Trennung in der Verbindungsebene 48 herbeigeführt, indem die Teile 13a, 13b des Abrollwerkzeuges 13 in den eingezeichneten Pfeilrichtungen 41 auseinandergefahren werden. Hierzu ist es erforderlich, daß die Führungsschiene 34 zusammen mit dem Querschlitten 39, 40 in den Pfeilrichtungen 41, 42 verschiebbar ist und im beschriebenen Anwendungsfalle in Pfeilrichtung 41 herausgefahren wird, so daß sich der Teil 13a, 13b des Abrollwerkzeuges 13 aus dem fertiggebogenen Profil 20 löst und das Profil 20 nun entnommen werden kann.

Die Verbindung der Teile 13a, 13b im Bereich der Verbindungsebene 48 kann durch Zapfen 53 erfolgen, die in entsprechenden Bohrungen im anderen Teil eingreifen und die beim Zusammenfahren der Teile das Drehmoment übernehmen.

In Fig. 9 ist in nicht näher dargestellter Weise noch vorgesehen, daß zunächst die Achse 5 gemäß Fig. 2 festgehalten wird, so daß beim Übergang auf die Fig. 3 zunächst die Drehbewegung in Pfeilrichtung 43 bei festgehaltener Achse 5, 6 durchgeführt wird und erst dann die Achse freigegeben wird, so daß dann danach erst das Abrollbiegeverfahren bei gelöster Achse durchgeführt wird. Hierzu ist es erforderlich, daß der gesamte Lagerschlitten 46, 47 arretiert wird, und bei arretiertem Lagerschlitten 46, 47 zunächst die Drehbewegung in Pfeilrichtung 43 durchgeführt wird, wodurch sich der Vorspannvorgang beim Übergang von Fig. 2 auf Fig. 3 ergibt. Erst dann wird der Lagerschlitten 46, 47 entarretiert und der beschriebene Abrollbiegevorgang wird eingeleitet, wie es anhand der Fig. 4 bis 8 beschrieben wurde.

Jeder Lagerschlitten 46, 47 ist hierbei im Bereich einer Führungsöffnung 54 in Pfeilrichtung 3, 4 bzw. 45 und in Gegenrichtung hierzu verschiebbar, wobei die Führungsöffnung 54 durch den Zwischenraum zwischen den sich gegenüberstehenden und einen gegenseitigen Abstand einnehmenden, zueinander parallelen Führungsschienen 34, 35 gebildet ist.

In Fig. 9 ist auch gezeigt, daß nach erfolgtem Biegevorgang das Ablaufschienenprofil 21 in Pfeilrichtung 49 nach unten abgehoben wird, während die Einspannstempel 22, 23 in Pfeilrichtung 51 nach oben abgehoben werden, so daß das fertig gebogene Profil 20 aus der Biegeform entnommen werden kann.

Das in den Figuren 12 bis 16 beschriebene weitere Ausführungsbeispiel zur Durchführung des Abroll-Biegeverfahrens unterscheidet sich von dem Ausführungsbeispiel nach den Fig. 1 bis 8 nur insoweit, als daß die beiden Abrollwerkzeuge keine gleiche Formgebung aufweisen, und daß die Bewegungsabläufe der beiden Abrollwerkzeuge zueinander nicht symmetrisch sind. Es wird nachfolgend erläutert, daß das in Fig. 12 links dargestellte Abrollwerkzeug 62 stets mit räumlich festgehaltener Achse bei Position 1 der Abszisse 2 verharrt, während das rechte Abrollwerkzeug 63 sich lediglich um eine 90°-Drehung dreht und hierbei sich in Richtung der Abszisse verschiebt. Das sich in gegenüberliegender Position in Bezug zum zu biegenden Profil 20 unten am Profil 20 anlegende Ablaufschienenprofil 61 ist nach wie vor in Richtung der Abszisse 2 verschiebbar.

Diese Anordnung ist maschinentechnisch einfacher herzustellen. Das linke Abrollwerkzeug 62 besteht aus einem zylindrischen Körper, aus dem im Querschnitt ein Kreissektor ausgeschnitten ist, während das rechte Abrollwerkzeug 63 genau diesem ausgeschnittenen Kreissektor entspricht. Beide Abrollwerkzeuge vereinigen sich nach Vollendung des Abroll-Biegeverfahrens zu einem geschlossenen Formkörper mit dem Außenumfang U, welcher dem Innenumfang des zu biegenden Profils 20 entspricht.

In Fig. 12 ist die Grundsituation gezeigt, wo das Abrollwerkzeug 62 feststehend ist und mit seinem Einspannstempel mit der gegenüberliegenden Einspannmatritze 15 das Einspannende 26 des Profils 20 eingespannt hat. Das Profil liegt hierbei auf einem Ablaufschienenprofil 61 auf, das Ablaufschienenprofil 61 hat den gleichen Profilquerschnitt, wie das zu biegende Profil. Auf der rechten Seite ist das Abrollwerkzeug 63 gezeigt, welches mit seiner Achse 5 noch zunächst feststeht und ebenfalls an seiner Einspannmatritze 14 mit dem gegenüberliegenden Einspannstempel 17 das Einspannende 27 des Profils 20 erfaßt hat.

Beim Übergang von Fig. 12 auf Fig. 13 beginnt der erste Bewegungsvorgang und zwar dreht sich das linke Abrollwerkzeug 62 in Pfeilrichtung 4 um den Winkel α, während das rechte Abrollwerkzeug 63 sich in Pfeilrichtung 3 ebenfalls um den Winkel α dreht. Während des Vorspannungsvorganges sind beide Achsen 5, 6 festgehalten. Das zu biegende Profil 20 bleibt wie beim ersten Ausführungsbeispiel während des gesamten Biegevorgangs unter dieser Vorspannung.

Nach Ausführung dieser Drehung verharren die beiden Abrollwerkzeuge in einer Zwischenstellung, die nicht gezeigt ist.

Nach Durchlaufen dieser Zwischenstellung dreht sich das rechte Abrollwerkzeug 63 gemäß Fig. 13 weiter in Pfeilrichtung 3, so daß es das Profil mit auf seinem Außenumfang aufwickelt und wobei gleichzeitig dieses Werkzeug auf dem Ablaufschienenprofil 61 abrollt. In Fig. 13 ist auf der rechten Seite die Beendigung dieses Abrollvorganges gezeigt. Das Abrollwerkzeug 63 hat sich hierbei genau um 90° gedreht, wobei die Achse 5 sich längs des Ablaufschienenprofils 61 in Pfeilrichtung 10 bewegt hat. Nach Beendigung dieses Abrollvorganges kommt ein Einspannstempel 23 und legt sich an den Außenumfang des rechten Abrollwerkzeuges 23 an.

In Fig. 14 ist der nächste Bewegungsablauf gezeigt. In Fig. 14 fängt jetzt das linke Abrollwerkzeug 62 an, sich in Pfeilrichtung 4 weiterzudrehen, wobei wichtig ist, daß die Achse am Ort festgehalten wird. Es wickelt also mit seinem Einspannwerkzeug 15, 16 das Schienenprofil 20 zu sich her, wobei gleichzeitig das Ablaufschienenprofil 61 in Pfeilrichtung 64 auf das linke Abrollwerkzeug 62 zubewegt wird. Die Achse 5 des rechten Abrollwerkzeuges 63 ist jetzt starr über nicht näher dargestellte Verbindungsglieder mit dem Ablaufschienenprofil 61 verbunden, so daß die beiden Teile (Ablaufschienenprofil 61 und Abrollwerkzeug 63) zusammen zu dem linken Abrollwerkzeug 62 hin gewickelt werden und sich in Pfeilrichtung 64 bewegen.

Fig. 15 ist der Bewegungsablauf kurz vor Beendigung des Wickelvorganges und zwar bei 270° Drehung des linken Abrollwerkzeuges 62 gezeigt. Das linke Abrollwerkzeug 62 hat sich bei örtlich feststehender Achse 6 weiter in Pfeilrichtung 4 gedreht, das Ablaufschienenprofil 61 hat sich weiter in Pfeilrichtung 64 bewegt.

Bei Fig. 4 ist noch zu erwähnen, daß - wie bei der ersten Ausführungsform - dann von der Seite her ein mitlaufender Einspannstempel 22 sich am Außenumfang des linken Abrollwerkzeuges 62 anlegt und auf der anderen Seite am Abrollwerkzeug 63 ein mitlaufender Einspannstempel 23, wobei dann von den Seiten her jeweils eine Säge 65 oder Schermesser in den Arbeitsablauf kommt und die verlorenen Köpfe (Einspannenden 26, 27) abtrennt.

Die mitlaufenden Einspannstempel 22, 23 laufen weiter, nehmen also an der Drehung teil, so daß sich die in Fig. 15 beschriebene Bewegungssituation ergibt, die sich um einen Bewegungswinkel von 90° von dem in Fig. 14 unterscheidet.

Fig. 16 zeigt nun den Formschluß zwischen beiden Abrollwerkzeugen, das Profil 20 ist damit vollumfänglich um beide ineinander eingreifenden Abrollwerkzeuge 62, 63 gewickelt, wobei die mitlaufenden Einspannstempel 22, 23 noch anliegen.

Das in Fig. 16 sich ergebende Werkzeug hat dann die genau dieselbe Formgebung, wie das Werkzeug, welches in den Fig. 9 - 11 gezeigt ist.

Anhand der Figur 17 wird ein drittes Ausführungsbeispiel des Abroll-Streck-Biegeverfahrens gezeigt, wobei das linke Abrollwerkzeug 92 als Vollzylinder ausgebildet ist, und das rechte Abrollwerkzeug entfällt und stattdessen nur noch ein Einspannwerkzeug, bestehend aus einer Einspannmatritze 14 und einem zugeordneten Einspannstempel 17, vorgesehen ist. Das Einspannwerkzeug klemmt also das Einspannende 27 des zu biegenden Profils 20 fest und erteilt ihm eine Zugspannung in Pfeilrichtung 8 während des gesamten Biegevorganges.

Das Abrollwerkzeug 92 besteht nun aus einem Vollrundprofil, welches eine Aufwickelbewegung durchführt, wobei unter Aufbringung von Vorspannung in Pfeilrichtung 8 die Schiene 61 in Pfeilrichtung 64 nach links sich bewegt, während sich das Abrollwerkzeug 92 in Pfeilrichtung 4 dreht. Die Drehung des Abrollwerkzeuges geht um 360°, man erhält hierdurch einen Radius der gebogenen Felge, der etwas größer ist als der Soll-Radius. Die fertige Biegung erreicht man dadurch, daß man einfach die fertige gebogene Felge in eine entsprechende Form einbringt und die auseinanderklaffenden Stöße zusammenschweißt.

Es wird noch darauf hingewiesen, daß in Fig. 17 die gleichen Einspannvorgänge und Ablängvorgänge erfolgen, wie es anhand der vorstehenden Figuren, beispielsweise Fig. 12 bis 16, erläutert wurde, d.h. es sind in gleicher Weise mehrere, nicht näher dargestellte Einspannwerkzeuge vorhanden, die sich nacheinanderfolgend in der beschriebenen Weise an das Profil 20 anlegen und es ist eine nicht näher dargestellte Ablängsäge vorhanden, welche das Einspannende des Profils 20 abschneidet.

Anhand der Zeichnungen 18 bis 24 werden nun Felgen, bestehend aus Felgenring und Felgenschüssel gezeigt, die aus einem einzigen Stück mit einer der drei vorher beschriebenen Ausführungsvariante des Abroll-Streck-Biegeverfahrens hergestellt werden können.

Anhand der folgenden Figuren wird nun gezeigt, wie eine besonders günstige Felgenform mit den beschriebenen Abroll-Streck-Biegeverfahren hergestellt werden kann. Kern dieser Ausführungsform ist, daß eine werkstoffeinstückige Felge hergestellt wird, d.h. Felgenschüssel und Felgenring sind werkstoffeinstückig miteinander verbunden und werden gemäß den vorher beschriebenen Ausführungsbeispielen fertig gebogen. Hiermit ist ein wesentlicher Vorteil verbunden, denn es bedurfte bisher aufwendiger Verbindungsverfahren, um beispielsweise einen separaten Felgenring mit einer separaten Felgenschüssel zu verbinden.

Der Kern des Ausführungsbeispieles liegt also darin, daß auch komplizierte Felgenformen in einem Stück mit dem beschriebenen Abroll-Streck-Biegeverfahren hergestellt werden können.

In Fig. 18 ist eine solche Felgenform gezeigt, wie sie mit dem vorher beschriebenen Abroll-Streck-Biegeverfahren hergestellt wird. Sie besteht aus einer Felgenschüssel 66, die werkstoffeinstückig mit einem Felgenring 67 verbunden ist. Im Urzustand, also im Rohzustand, ist ein Strangpreßprofil vorhanden, was als gerades Profil 20 ausgebildet ist und einen vertikal abragenden Schenkel 66 hat, der im gerundeten Zustand die Felgenschüssel 66 ergibt. Ebenso wird nach dem beschriebenen Verfahren der Felgenring 67 aus einem geraden Stück zu einem vollständig gerundeten Stück fertig gebogen.

In Figur 18 ist eine solche fertig gebogene Felge gezeigt, die mit einem Achsflansch 68 über Schrauben 72 verbunden ist, wobei jede Schraube 72 durch zueinander fluchtende Bohrungen 71 im Achsflansch 68 und der Felgenschüssel 66 greift und mit nicht näher dargestellten Gewindemuttern befestigt ist.

Beim Abrollstreck-Biegeverfahren kommt es zu Materialverdrängungen im Bereich der Felgenschüssel 66, die dazu führen, daß sich Rippen 69 bilden, die von radial einwärts nach radial auswärts laufen. Diese Rippen 69 verstärken das Profil der Felgenschüssel 66 und dienen der Aussteifung. Wichtig ist beim Abroll-Streck-Biegeverfahren, daß die Stauchzone im Vergleich zu herkömmlichen Biegeverfahren ganz klein gehalten wird. Durch die neue Biegetechnik kann genügend Material in Form der Felgenschüssel 66 zur Verfügung gestellt werden. Während des Biegevorganges wird das Material radial einwärts zum Fließen gebracht oder die Schüssel in einem nachgeschalteten zusätzlichen Arbeitsgang durch Schmieden, Prägen, Pressen usw. geformt. Dies ermöglicht erst überhaupt die Umformung von solch großvolumigen Profilen.

Im Bereich der Felgenschüssel 66 ist ein Reststauch-Volumen gegeben, dessen Restmaterial durch einen Kaltfließvorgang verdrängt werden muß.

Man hat mehrere Möglichkeiten, dieses verdrängte Material umzuformen, nämlich in Form von Rippen 69, wie es in Fig. 18 gezeigt ist, oder in Form eines verdickten Querschnitts der Felgenschüssel 73, wie es in Fig. 21 gezeigt ist, oder auch indem man die Felgenschüssel 66 radial (in Richtung zur Mitte) verlängert und gleichmäßigen Querschnitt beibehält. Die Rippen 69 kann man durch ein Prägeverfahren erhalten, wie es anhand der Fig. 24 beschrieben ist. Eine andere Möglichkeit ist die Beseitigung der Stauchkräfte durch das Einstanzen von Schlitzen 70' in die Felgenschüssel 66.

Entsprechend der Fig. 20 wird der Steg der zukünftigen Felgenschüssel 66 im geraden Zustand aufgeschlitzt, wobei Schlitze 70 eingebracht werden, die in der ursprünglichen umgebogenen Form parallel zueinander liegen, und die beim Biegevorgang mit ihren radial einwärts liegenden Enden dann geschlossen werden. Die Fig. 20 zeigt hierbei die gerade umgebogene Felgenschüssel, d.h. also den geraden Teil, der nachher dann zur Felgenschüssel gebogen wird und die Fig. 19 die fertig gebogene Felgenschüssel 66, wo die geraden Schlitze 70 in konische Schlitze 70 umgeformt wurden, deren radial einwärts liegende Enden zusammengedrückt sind. Die Felgenschüssel weist mehrere am Umfang verteilt angeordnete Bohrungen 71 auf, die jeweils von einer Schraube 72 durchgriffen werden, welche die Felgenschüssel 66 mit dem Achsflansch 68 verbindet.

Die Fig. 21 zeigt, daß das bei der Umformung entstehende Restmaterial auch in Form eines verdickten Querschnittes zu einer Felgenschüssel 73 verdickten Querschnittes umgeformt werden können.

Die Fig. 22 zeigt, daß die einstückig mit dem Felgenring verbundene Felgenschüssel 74 in Verlängerung des Felgenhorns 75 positioniert ist, während Fig. 23 zeigt, daß die Felgenschüssel 76 zwischen Felgenhorn 75 und Felgenhump 77 angeordnet sein kann.

In der Fig. 24 wird nun dargestellt, daß man eine werkstoffeinstückige Herstellung einer Komplettfelge, bestehend aus Felgenring und damit verbundener Felgenschüssel, auch in zwei voneinander getrennten Arbeitsgängen vollziehen kann.

Der erste Arbeitsgang bezieht sich darauf, daß zunächst das Felgenprofil rund gebogen wird, wobei die Felgenschüssel 78 nicht vollkommen ausgeformt ist, sondern nach der Beendigung des Abroll-Streck-Biegeverfahrens lediglich in Form eines verdickten Ansatzes 80 im Profil ähnlich der Fig. 21 vorhanden ist. Um nun die Felgenschüssel 78 vollständig auszuformen, wird an das Abroll-Streck-Biegeverfahren ein Fließ-Preß-Verfahren angeschlossen. Ähnlich, wie man bei einer Schmiedepresse einen Fließvorgang des Materials erbringt, um eine Flächenvergrößerung des Materials zu erreichen, so wird aus dem hier vorliegenden, rund gebogenen, verdickten Ansatz 80 eine Felgenschüssel 78 dünneren Querschnittes durch Fließpressen umgeformt. Die in der Fig. 24 beschriebene Verfahrensweise geht also einen anderen Weg, als es beispielsweise in Bezug auf die Fig. 18 - 23 beschrieben worden ist. Dort wird in einem einzigen Arbeitsgang die Komplettfelge durch das Abroll-Streck-Biegeverfahren hergestellt, weil nämlich die Felgenschüssel mit ihrem endgültigen Querschnitt bereits schon im Abroll-Streck-Biegeverfahren hergestellt wird.

Evtl. Nacharbeiten, wie Anbringung von Einprägungen, im Bereich der Bohrungen für die Radbolzen, Anbringen von rippenartigen Einprägungen usw., um die Materialverformungen besser aufzufangen, bleiben hierbei außer Betracht.

Die Felgenschüssel 78 mit dem Ansatz 80 ist also das Produkt des vorher beschriebenen Abroll-Streck-Biegeverfahrens. Der Ansatz 80 wird dann durch ein Fließ-Preß-Verfahren in die in gestrichelter Darstellung dargestellte Felgenschüssel 78 umgeformt. Hierbei greifen an beiden Seiten des Ansatzes 80 nicht näher dargestellte Preßbacken an, welche das Fließ-Pressen durchführen und die den Ansatz 80 dann schließlich in die in gestrichelter Darstellung dargestellte Felgenschüssel 78 umformen.

Die umgeformte Felgenschüssel 78 weist hierbei am Umfang verteilt angeordnete Rippen 82 auf, die durch ein Fließ-Prägeverfahren hergestellt worden sind. Während des Fließ-Preß-Vorganges wurden also diese Rippen 82 hergestellt. Ebenso können Schlitze ausgestanzt werden, um eine Abführung von Warmluft aus der Bremse zu gewährleisten, bzw. die Kühlung der Bremse zu gewährleisten.

Die Rippen 82 laufen in einen Anschlußteil 89 über, in dem am Umfang verteilt wiederum Bohrungen 84 für das Eingreifen von Stehbolzen 85 vorgesehen sind, die mit dem Anschlußflansch 90 für eine Bremsscheibe vorgesehen sind, wobei die gesamte Anordnung mit Radmuttern 86 an einer Radnabe 83 befestigt ist.

Der Anschlußflansch 89 weist dann an einem unteren Teil im Bereich der Symmetrieachse 81 (Radmitte) eine Mittenbohrung 88 für das Aufstecken auf die Radnabe 83 auf.

Oben an dem Anschlußflansch 90 für die Bremsscheibe ist noch der Bremsträger 87 in unmaßstäblicher Darstellung gezeichnet.

## Zeichnungslegende

1 Abrollebene
2 Achse
3 Pfeilrichtung
4 Pfeilrichtung
5 Achse
6 Achse
7 Pfeilrichtung
8 Pfeilrichtung (Fig. 17)

10 Pfeilrichtung (Fig. 13)
11
12 Abrollwerkzeug
13 Abrollwerkzeug
13a 13b Teil
14 Einspannmatritze
15 "
16 Einspannstempel (mitlaufend)
17 Einspannstempel
18 Schermesser (mitlaufend)

19 "
20 Profil
21 Ablaufschienenprofil
22 Einspannstempel (mitlaufend)
23 "
24 Stanzstück
25 "

26 Einspannende
27 "
28 Schließstoß
29 Antriebswelle
30 Antriebswelle
31 Lagerbüchse
32 "
33 Führungsschiene
34 Führungsschiene
35 Ritzel
36 Ritzel
37 Zahnstange
38 Zahnstange
39 Querschlitten
40 Querschlitten
41 Pfeilrichtung
42 Pfeilrichtung
43 Pfeilrichtung

44 Pfeilrichtung
45 Pfeilrichtung
46 Lagerschlitten

47 Lagerschlitten
48 Verbindungsebene (Abrollwerkzeug 13)
49 Pfeilrichtung
50 Pfeilrichtung
51 Pfeilrichtung
52 Verbindungsebene
53 Zapfen
54 Führungsöffnung

U = Umfang
X = Überstand
α, β = Winkel
60 Mittenquerachse
61 Ablaufschienenprofil
62 Abrollwerkzeug
63 Abrollwerkzeug
64 Pfeilrichtung
65 Säge
66 Felgenschüssel
67 Felgenring
68 Achsflansch
69 Rippe
70 Schlitz 70'
71 Bohrung
72 Schraube
73 Felgenschüssel
74 Felgenschüssel
75 Felgenhorn
76 Felgenschüssel
77 Felgenhump
78 Felgenschüssel
79 Felgenring
80 Ansatz
81 Symmetrieachse
82 Rippe
83 Radnabe
84 Bohrung
85 Stehbolzen
86 Radmutter
87 Bremsträger
88 Mittenbohrung
89 Anschlußteil 90 Anschlußflansch
92 Abrollwerkzeug

**Patentansprüche**

1. Verfahren zur Herstellung eines aus einem Metallprofil (20) bestehenden Rundkörpers, insbesondere einer Radfelge, wobei der Rundkörper als Strangpreßprofil mit endgültiger Querschnittsform gefertigt und zum Rundkörper gerundet wird, wobei an der Unterseite des Profils (20) ein Ablaufschienenprofil (21) mit einstellbarer Kraft an das Profil (20) angepresst wird und der Rundkörper schließlich im Schließstoß durch eine Schweißung verbunden wird, dadurch gekennzeichnet, daß das gerade ausgebildete Profil (20) einstellbar auf Zug vorgespannt und anschließend gerundet wird, wobei

a₁) das gerade ausgebildete Profil (20) an seinen beiden freien Enden zwischen Einspannwerkzeugen, bestehend aus jeweils einer Einspannmatritze (14, 15) und einem gegenüberliegenden Einspannstempel (16, 17), eingespannt wird,

a₂) daß beide Einspannwerkzeuge (14, 17 und 15, 16) auseinander bewegt werden, wobei das Profil (20) in Richtung seiner Längsachse auf Zug vorgespannt wird,

b₁) daß mindestens das eine Ende des unter Vorspannung stehenden Profils (20) am Außenumfang eines Abrollwerkzeuges (12, 13; 62, 62; 92) befestigt wird,

b₂) daß mindestens das am einen Ende des Profils (20) befestigte Abrollwerkzeug (12, 13; 62, 63; 92) eine Drehbewegung im Sinne einer Wickelbewegung ausführt und das unter Vorspannung stehende Profil (20) um den Außenumfang herum aufwickelt,

b₃) und daß nach erfolgtem Wickelvorgang das Abrollwerkzeug (12, 13; 62, 63; 92) aus dem rundgebogenen Profil (20) entfernt wird.

2. Verfahren nach Anspruch 1, dadurch gekennzeichnet, daß zur Ausführung des Verfahrensschrittes b₁ zwei gleiche als Halbzylinder ausgebildete, Abrollwerkzeuge (12, 13) vorgesehen sind, daß das jeweilige Ende des Profils (20) jeweils am Außenumfang jedes Abrollwerkzeuges (12, 13) befestigt wird, und daß zur Ausführung des Verfahrensschrittes b₂ beide Abrollwerkzeuge (12, 13) mit ihrer Achse (5, 6) eine gleichartige, nach innen in Richtung zu einer Mittenquerachse (60) des Profils (20) gerichtete, translatorische Wickelbewegung ausführen (Fig. 1 - 8).

3. Verfahren nach Anspruch 1, dadurch gekennzeichnet, daß zur Ausführung des Verfahrensschrittes b₁ zwei ungleiche, als Zylindersektoren ausgebildete, Abrollwerkzeuge (62, 63) vorgesehen sind, daß das jeweilige Ende des Profils (20) jeweils am Außenumfang jedes Abrollwerkzeuges (62, 63) befestigt wird, und daß zur Ausführung des Verfahrensschrittes b₂ nur ein Abrollwerkzeug (62) bei örtlich feststehender Achse (6) eine Drehbewegung im Sinne einer Aufwickelbewegung durchführt, während das andere Abrollwerkzeug (63) mit seiner Achse (5) lediglich eine translatorische Längsbewegung längs der Wickelbahn ausführt, (Figur 12 - 16).

4. Verfahren nach Anspruch 1, dadurch gekennzeichnet, daß bei der Verwendung nur eines Abrollwerkzeuge (92) die Achse (6) räumlich feststeht und lediglich eine Drehbewegung ausführt, während das am gegenüberliegenden Ende des Profils (20) befestigte Einspannwerkzeug (14, 17) die notwendige Vorspannung am Profil (20) erzeugt und längs der Wickelbahn verschiebbar ist, (Fig. 17).

5. Vorrichtung zur Herstellung eines aus einem Metallprofil bestehenden Rundkörpers, insbesondere einer Radfelge, mit einem Abrollwerkzeug (12, 13; 62, 63; 92), um dessen Umfang herum ein Metallprofil (20) gewickelt werden kann und mit einer dem Umfang des Abrollwerkzeuges zugeordneten Einspannmatritze (14) sowie einem Einspannmittel, bestehend aus einem ihr gegenüberliegenden Einspannstempel (17), womit das Ende des Metallprofils (20) eingespannt werden kann, dadurch gekennzeichnet, daß zum Einspannen des anderen Endes des Metallprofils (20) zweite Einspannmittel, bestehend aus einer zweiten Einspannmatritze (15) sowie einem zweiten, ihr gegenüberliegenden Einspannstempel (16), vorhanden sind, und wobei die dem Umfang des Abrollwerkzeuges (12, 13; 62, 63; 92) zugeordneten Einspannmittel gegenüber den zweiten Einspannmitteln im Abstand einstell- und verspannbar sind, und wobei das Abrollwerkzeug in Längsrichtung eines Abrollschienenprofils (21) abrollbar vorgesehen ist.

6. Vorrichtung nach Anspruch 5, dadurch gekennzeichnet, daß die zweiten Einspannmittel (15, 16) einem zweiten Abrollwerkzeug (12, 13; 62, 63; 92) zugeordnet sind.

7. Vorrichtung nach Anspruch 6, dadurch gekennzeichnet, daß die beiden Abrollwerkzeuge (12, 13 und 62, 63) bei deren Aneinanderliegen einen rotationssymmetrischen Körper darstellen.

8. Vorrichtung nach Anspruch 5, dadurch gekennzeichnet, daß ein einziges Abrollwerkzeug (92) in Form eines Zylinders vorgesehen ist und daß das eine Einspannwerkzeug (12, 14) längs einer Wickelbahn verschiebbar angeordnet ist.

9. Vorrichtung nach Anspruch 6, dadurch gekennzeichnet, daß die Abrollwerkzeuge (12, 13) in Längsrichtung des Profils (20) abrollbar ausgebildet sind und ihre Achsen (5, 6) dabei zueinander bewegt werden.

10. Vorrichtung nach Anspruch 6, <u>dadurch gekennzeichnet</u>, daß die Abrollwerkzeuge (12, 13) Abrollteile (13a, 13b) aufweisen, die drehfest mit jeweils einer Antriebswelle (29, 30) verbunden sind, auf der jeweils ein Ritzel (35, 36) drehfest angeordnet ist, welches mit jeweils einer Zahnstange (37, 38) in Eingriff steht, und daß die Antriebswerkzeuge (29, 39) Lagerbüchsen (31, 32) aufweisen, die mit Lagerschlitten (46, 47) verbunden sind, welche in Biegerichtung an parallelen Führungsschienen (33, 34) angeordnet sind.

11. Vorrichtung nach Anspruch 6, <u>dadurch gekennzeichnet</u>, daß die Abrollwerkzeuge (12, 13) Abrollteile (13a, 13b) aufweisen, die in axialer Richtung entlang ihrer jeweiligen Antriebswelle (29, 30) verschiebbar angeordnet sind.

## Revendications

1. Procédé pour fabriquer un corps circulaire consistant en un profilé métallique (20), notamment une jante de roue, dans lequel le corps circulaire est élaboré sous la forme d'un profilé filé présentant sa configuration définitive, en section transversale, et transformé en un corps circulaire par cintrage, un profilé formant rail de roulement (21) étant pressé contre le profilé (20), au niveau de la face inférieure de celui-ci avec une force réglable et, le corps circulaire étant finalement assemblé en un joint de fermeture au moyen d'une soudure, caractérisé en ce qu'il comporte les étapes qui consistent à précontraindre par traction d'une manière réglable le profilé (20) dans sa configuration rectiligne et ensuite à la cintrer, étapes au cours desquelles:

$a_1$) le profilé à configuration rectiligne (20) est, au niveau de ses deux extrémités libres, encastré entre des outils de serrage qui se composent respectivement d'une matrice de serrage (14, 15) et d'un poinçon de serrage (16, 17) faisant face à celle-ci,

$a_2$) les deux outils de serrage (14, 17 et 15, 16) sont déplacés en étant éloignés l'un de l'autre, le profilé (20) étant ainsi précontraint par traction dans la direction de son axe longitudinal,

$b_1$) l'une au moins des extrémités du profilé (20) placé sous précontrainte est fixée à la périphérie extérieure d'un outil enrouleur (12, 13 ; 62, 63 ; 92),

$b_2$) l'outil enrouleur (12, 13 ; 62, 63 ; 92) fixé à l'une au moins des extrémités du profilé (20) opère un mouvement de rotation, dans le sens d'un mouvement d'enroulement, et le profilé (20) placé sous précontrainte s'enroule autour de la périphérié extérieure,

$b_3$) et, une fois réalisée l'opération d'enroulement, l'outil enrouleur (12, 13 ; 62, 63 ; 92) est ôté du profilé cintré (20).

2. Procédé selon la revendication 1, caractérisé en ce que pour l'exécution de l'étape opératoire $b_1$, il est prévu deux outils enrouleurs (12, 13) identiques, conçus sous la forme de demi-cylindre, en ce que les extrémités du profilé (20) sont respectivement fixées à la périphérie extérieure de chacun des outils enrouleurs (12, 13), et en ce que, par l'exécution de l'étape opératoire $b_2$ les axes (5, 6) des deux outils enrouleurs (12, 13) effectuent un mouvement d'enroulement translatoire identique, orienté vers l'intérieur en direction d'un axe transversal médian (60) du profilé (20) (figures 1 - 8).

3. Procédé selon la revendication 1, caractérisé en ce que, pour l'exécution de l'étape opératoire $b_1$, il est prévu deux outils enrouleurs (62, 63) différents, conçus sous la forme de secteurs de cylindre, en ce que les extrémités du profilé (20) sont respectivement fixées à la périphérie extérieure de chacun des outils enrouleurs (62, 63), et en ce que, pour l'exécution de l'étape opératoire $b_2$, un seul outil enrouleur (62) effectue un mouvement de rotation dans le sens d'un mouvement d'enroulement, en conservant un axe localement fixe (6), tandis que l'autre outil enrouleur (63) n'effectue avec son axe (5) qu'un déplacement longitudinal translatoire le long de la trajectoire d'enroulement (figures 12 - 16).

4. Procédé selon la revendication 1, caractérisé en ce que, dans le cas où un seul outil enrouleur (92) est utilisé, l'axe (6) reste fixe dans l'espace et n'opère qu'un mouvement de rotation, tandis que l'outil de serrage (14, 17) fixé à l'extrémité opposée du profile (20) exerce sur le profilé (20) la précontrainte nécessaire et est apte à se déplacer le long de la trajectoire d'enroulement (figure 17).

5. Dispositif pour fabriquer un corps circulaire consistant en un profilé métallique, notamment une jante de roue, comportant un outil enrouleur (12, 13; 62, 63; 92) sur la périphérie duquel un profilé métallique (20) est apte à être enroulé, et une matrice de serrage (14) associée à la périphérie de l'outil enrouleur, ainsi qu'un moyen de serrage qui se compose d'un poinçon de serrage (17) faisant face à la matrice, au moyen desquels l'extrémité du profilé métallique (20) peut être serrée, caractérisé en ce que, pour le serrage de l'autre extrémité du profilé métallique (20), il est prévu des seconds moyens de serrage composés d'une seconde matrice de serrage (15) et d'un second poinçon de serrage (16) lui faisant face, tandis que les moyens de serrage associés à la périphérie de l'outil enrouleur (12, 13; 62, 63; 92) sont réglables et déformables vis-à-vis des seconds moyens de serrage à une certaine distance de ceux-ci, et dans lequel l'outil enrouleur est conçu pour pouvoir rouler dans le sens de la longueur d'un profilé formant rail d'enroulement (21).

6. Dispositif selon la revendication 5, caractérisé en ce que les seconds moyens de serrage (15, 16) sont associés à un second outil enrouleur (12, 13 ; 62, 63 ; 92).

7. Dispositif selon la revendication 6, caractérisé en ce que, lorsqu'ils sont juxtaposés, les deux outils enrouleurs (12, 13 et 62, 63) constituent un corps de révolution symétrique.

8. Dispositif selon la revendication 5, caractérisé en ce qu'il est prévu un seul outil enrouleur (92) sous la forme d'un cylindre, et en ce que l'un des outils de serrage (12, 14) est disposé de manière à pouvoir se déplacer le long d'une trajectoire d'enroulement.

9. Dispositif selon la revendication 6, caractérisé en ce que les outils enrouleurs (12, 13) sont conçus pour pouvoir rouler dans le sens de la longueur du profilé (20) et leurs axes (5, 6) sont, dans ce cas, déplacés l'un vers l'autre.

10. Dispositif selon la revendication 6, caractérisé en ce que les outils enrouleurs (12, 13) comportent des éléments enrouleurs (13a, 13b) respectivement accouplés, d'une manière solidaire en rotation, avec un arbre d'entraînement (29, 30) sur lequel est monté, solidaire en rotation, un pignon (35, 36) correspondant, en prise avec une crémaillère (37, 38) respective, et en ce que les organes d'entraînement (29, 30) possèdent des coussinets (31, 32) accouplés avec des coulisseaux (46, 47) disposés dans une direction de cintrage sur des rails de guidage parallèles (33, 34).

11. Dispositif selon la revendication 6, caractérisé en ce que les outils enrouleurs (12, 13) comportent des éléments enrouleurs (13a, 13b) conçus pour pouvoir se déplacer dans une direction axiale le long de leur arbre d'entraînement respectif (29, 30).

### Claims

1. Process for the production of a circular body comprising a metal section (20), in particular of a wheel rim, wherein the circular cement is wrought as an extruded section having the final cross-sectional shape and is rounded into a circular body, to which end a running rail section (21) is thrust under adjustable force against the underside of the section (20) and the circular body is finally joined by means of a welding operation in the joint to be closed, characterised in that the rectilinearly formed section (20) is adjustably prestressed in tension and is subsequently rounded, to which end

$a_1$) the rectilinearly formed section (20) is gripped at its two free ends between clamping tools, each comprising a clamping socket (14, 15) and an oppositely situated clamping plunger (16, 17),

$a_2$) that both clamping tools (14, 17 and 15, 16) are drawn apart, whilst the section (20) is tensionally prestressed in the direction of its longitudinal axis,

$b_1$) that at least the one end of the section (20) placed under initial stress is fastened to the external periphery of a rolling tool (12, 13; 62, 62; 92),

$b_2$) that at least the rolling tool (12, 13: 62, 63: 92) secured to the one end of the section (20) performs a rotational displacement in the form of a winding movement and winds the section (20) placed under initial stress around the external periphery,

$b_3$) and that following the completed winding operation, the rolling tool (12, 13; 62, 63; 92) is removed from the circularly bent section (20).

2. Process according to claim 1, characterised in that for the purpose of performing the process stage $b_1$, two identical rolling tools (12, 13) formed as half-cylinders are provided, that the corresponding end of the section (20) is secured in each case on the external periphery of each rolling tool (12, 13), and that for the purpose of performing the process stage $b_2$ both rolling tools (12, 13) execute with their axes a similar translatory winding movement (Figs. 1 - 8) directed inwardly in the direction towards a central transverse axis (60) of the section (20).

3. Process according to claim 1, characterised in that for the purpose of performing the process stage $b_1$ two dissimilar rolling tools (62, 63) formed as cylindrical sectors are provided, that the respective end of the section (20) is secured in each case on the external periphery of each rolling tool (62, 63), and that for the purpose of performing the process stage $b_2$ one rolling tool (62) only undergoes a rotational displacement, with the axis (6) positionally stationary, in the form of a winding movement, whereas the other rolling tool (63) merely executes with its axis (5) a longitudinal translatory displacement, along the winding path (Figures 12 - 16).

4. Process according to claim 1, characterised in that with the use of only one rolling tool (92) the axis (6) is spatially fixed and merely executes a rotational displacement, while the clamping tool (14, 17) fastened on the oppositely situated end of the section (20) generates the required pre-stress on the section (20) and is displaceable along the winding path (fig. 17).

5. Device for the production of a circular body comprising a metal section, in particular of a wheel rim, comprising a rolling tool (12, 13; 62, 63; 92) around the periphery of which can be wound a metal section (20) with a clamping socket (14) associated with the periphery of the rolling tool, as well as a clamping means formed by a clamping plunger (17) oppositely situated thereto, whereby the end of the metal section (20), can be clamped, characterised in that second clamping means comprising a second clamping socket (15) as well as a second clamping plunger (16) oppositely situated thereto, are available for clamping the other end of the metal section (20) and wherein the clamping means associated with the periphery of the rolling tool (12, 13; 62, 63; 92) may be adjusted and stressed with spacing relative to the second clamping means, and wherein the rolling tool is arranged to be rollable in the longitudinal direction of a rolling rail section (21).

6. Device according to claim 5, characterised in that the second clamping means (15, 16) are allocated to a second rolling tool (12, 13; 62, 63; 92).

7. Device according to claim 6, characterised in that the two rolling tools (12, 13, and 62, 63) define a rotationally symmetrical element upon being placed one against the other.

8. Device according to claim 5, characterised in that a single rolling tool (92) in the form of a cylinder is provided and that the one clamping tool (12, 14) is arranged to be displaceable along a winding path.

9. Device according to claim 6, characterised in that the rolling tools (12, 13) are arranged to be rollable in the longitudinal direction of the section (20) and for their axes (5, 6) thereupon to be moved with respect to one another.

10. Device according to claim 6, characterised in that the rolling tools (12, 13) comprise rolling elements (13a, 13b) which are co-rotatorily coupled in each case with a driving spindle (29, 30) on which a respective pinion (35, 36) is co-rotatorily arranged, which pinion is in mesh in each case with a rack (37, 38), and that the driving tools (29, 39) comprise bearing bushings (31, 32) which are connected to bearing slides (46, 47) which are arranged on parallel guiding rails (33, 34) in the bending direction.

11. Device according to claim 6, characterised in that the rolling tools (12, 13) comprise rolling elements (13a, 13b) which are arranged to be displaceable in the axial direction along their respective driving spindles (29, 30).

0 128 570

FIG 1

FIG 2

1

FIG 3

FIG 4

FIG 5

FIG 6

FIG 7

0 128 570

FIG 8

FIG 9

7

0 128 570

FIG 10A

FIG 10B

$$\frac{u}{2} = 180°$$

FIG 11

9

FIG 12

FIG 13

FIG 14

FIG 15

FIG 16

FIG 17

0 128 570

FIG 18

FIG 19

FIG 21

FIG 20

73

70'

FIG 22

FIG 23

FIG 24

79

80

78

82

87

89

90

83

86

85

84

81

88

25